(19) Europäisches Patentamt
European Patent Office
Office européen des brevets

(11) **EP 4 067 299 A1**

(12) **EUROPEAN PATENT APPLICATION**
published in accordance with Art. 153(4) EPC

(43) Date of publication:
**05.10.2022 Bulletin 2022/40**

(21) Application number: **20892748.3**

(22) Date of filing: **29.10.2020**

(51) International Patent Classification (IPC):
**C01B 3/38** (2006.01)     **H01M 8/00** (2016.01)
**H01M 8/0438** (2016.01)     **H01M 8/04537** (2016.01)
**H01M 8/04746** (2016.01)     **H01M 8/0606** (2016.01)
**H01M 8/10** (2016.01)     **H01M 8/12** (2016.01)

(52) Cooperative Patent Classification (CPC):
**C01B 3/38; H01M 8/00; H01M 8/0438;**
**H01M 8/04537; H01M 8/04746; H01M 8/0606;**
**H01M 8/10; H01M 8/12;** Y02E 60/50

(86) International application number:
**PCT/JP2020/040604**

(87) International publication number:
**WO 2021/106489 (03.06.2021 Gazette 2021/22)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **29.11.2019 JP 2019216218**

(71) Applicant: **Panasonic Intellectual Property**
**Management Co., Ltd.**
**Osaka-shi, Osaka 540-6207 (JP)**

(72) Inventors:
• **NARITA, Satoru**
  **Osaka-shi, Osaka (JP)**
• **TSUYUGUCHI, Kouhei**
  **Osaka-shi, Osaka (JP)**
• **MORI, Shusuke**
  **Osaka-shi, Osaka (JP)**

(74) Representative: **Grünecker Patent- und**
**Rechtsanwälte**
**PartG mbB**
**Leopoldstraße 4**
**80802 München (DE)**

(54) **HYDROGEN GENERATION DEVICE, FUEL CELL SYSTEM, AND METHOD FOR OPERATING HYDROGEN GENERATION DEVICE**

(57)     A hydrogen generation device (1) includes a reformer (10), a raw fuel supplier (11), a detector (12), a measuring instrument (13), and a controller (14). The reformer (10) generates a hydrogen-containing gas from a raw fuel gas. The raw fuel supplier (11) supplies the raw fuel gas to the reformer (10). The detector (12) measures a first measurement value dependent on the flow rate of the raw fuel gas. The measuring instrument (13) measures a second measurement value varying depending on a quantitative mixture state of a hydrogen gas in the raw fuel gas, and determines, on the basis of the second measurement value, a characteristic value indicating the quantitative mixture state. The controller (14) adjusts an operation parameter on the basis of the first measurement value and the characteristic value. The operation parameter is for controlling generation of the hydrogen-containing gas in the reformer (10).

FIG. 1

**Description**

BACKGROUND

1. Technical Field

The present disclosure relates to hydrogen generation devices, fuel cell systems, and methods for operating hydrogen generation devices.

2. Description of the Related Art

A technique for generating hydrogen from a raw fuel gas primarily containing hydrocarbons in fuel cell systems is conventionally known. For example, Patent Literature (PTL) 1 discloses a hydrogen production device including a steam reformer that causes a raw fuel gas containing hydrocarbons to react with steam to produce hydrogen from the raw fuel gas. This hydrogen production device includes a mass flowmeter and a controller.

The mass flowmeter measures the mass flow rate of the raw fuel gas. The controller calculates, on the basis of the mass flow rate measured by the mass flowmeter, the mass flow rate of carbon contained in the raw fuel gas, and controls, on the basis of the calculated value, the flow rate of steam to be supplied to the steam reformer. For the raw fuel gas, a saturated hydrocarbon-based gas such as natural gas and liquefied petroleum gas (LPG) and an unsaturated hydrocarbon-based gas are usable, for example. The mass flowmeter is a thermal flow sensor, for example.

Citation List

Patent Literature

PTL 1: Unexamined Japanese Patent Publication No. 2004-059354

SUMMARY

In PTL 1, the raw fuel gas is not assumed to contain hydrogen. For example, the flowmeter adjusted for natural gas that is used as the raw fuel gas cannot detect a hydrogen mixture state in the raw fuel gas. Therefore, there is a discrepancy between the flow rate measured by the flowmeter and an actual flow rate. This may cause the operations of the hydrogen generation device and the fuel cell system to be off-balance. Furthermore, the concentration of hydrogen contained in the raw fuel gas may change with time. Thus, it is difficult to know the hydrogen mixture state in the raw fuel gas in advance.

The present disclosure provides a technique for properly controlling generation of a hydrogen-containing gas according to a quantitative hydrogen mixture state in a raw fuel gas.

The present disclosure provides a hydrogen generation device including: a reformer that generates a hydrogen-containing gas from a raw fuel gas; a raw fuel supplier that supplies the raw fuel gas to the reformer; a detector that measures a first measurement value dependent on a flow rate of the raw fuel gas supplied by the raw fuel gas supplier; a measuring instrument that measures a second measurement value varying depending on a quantitative mixture state of a hydrogen gas in the raw fuel gas, and determines, based on the second measurement value, a characteristic value indicating the quantitative mixture state; and a controller that adjusts, based on the first measurement value and the characteristic value, an operation parameter for controlling generation of the hydrogen-containing gas in the reformer.

According to the present disclosure, it is possible to properly control the generation of the hydrogen gas in the reformer according to the quantitative mixture state of a hydrogen gas in the raw fuel gas.

BRIEF DESCRIPTION OF THE DRAWINGS

Fig. 1 is a configuration diagram illustrating one example of a hydrogen generation device according to the present disclosure;
Fig. 2 is a flowchart illustrating one example of a process in a hydrogen generation device;
Fig. 3 is a graph illustrating the relationship between the heat loss coefficient of each gas and the temperature of a heat element;
Fig. 4 is a configuration diagram illustrating one example of a measuring instrument in a hydrogen generation device according to the present disclosure; and

Fig. 5 is a configuration diagram illustrating one example of a fuel cell system according to the present disclosure.

DETAILED DESCRIPTIONS

Underlying Knowledge Forming Basis of the Present Disclosure

For example, there has been an attempt to supply a natural gas pipeline with a hydrogen gas generated by power-to-gas. In this case, when generating a hydrogen-containing gas from a raw fuel gas in a reformer, it is assumed that the raw fuel gas is mixed with the hydrogen gas. In this case, the concentration of the hydrogen gas in the raw fuel gas is assumed to vary by location or time. When the raw fuel gas is mixed with the hydrogen gas, using a thermal mass flowmeter to measure the flow rate of the raw fuel gas as in the technique disclosed in PTL 1 may result in the actual flow rate of the raw fuel gas being greater than the measured flow rate. For this reason, there is a possibility that the heat balance appropriate for generation of the hydrogen-containing gas in the reformer cannot be maintained and it becomes difficult to stably generate the hydrogen-containing gas in the reformer.

Thus, the inventors of the present disclosure studied day and night in order to develop a technique for properly controlling generation of a hydrogen gas according to a quantitative mixture state of a hydrogen gas in a raw fuel gas, and invented a hydrogen generation device according to the present disclosure.

Summary according to One Aspect of the Present Disclosure

A hydrogen generation device according to the present disclosure includes: a reformer that generates a hydrogen-containing gas from a raw fuel gas; a raw fuel supplier that supplies the raw fuel gas to the reformer; a detector that measures a first measurement value dependent on a flow rate of the raw fuel gas supplied by the raw fuel gas supplier; a measuring instrument that measures a second measurement value varying depending on a quantitative mixture state of a hydrogen gas in the raw fuel gas, and determines, based on the second measurement value, a characteristic value indicating the quantitative mixture state; and a controller that adjusts, based on the first measurement value and the characteristic value, an operation parameter for controlling generation of the hydrogen-containing gas in the reformer.

With this, the operation parameter for controlling the generation of the hydrogen-containing gas in the reformer is adjusted on the basis of the first measurement value dependent on the flow rate of the raw fuel gas and the characteristic value indicating the quantitative mixture state of the hydrogen gas in the raw fuel gas. Thus, the generation of the hydrogen-containing gas in the reformer can be properly controlled according to the quantitative mixture state of the hydrogen gas in the raw fuel gas, and the hydrogen-containing gas can be stably generated in the reformer.

In the hydrogen generation device according to the present disclosure, the measuring instrument may determine the characteristic value based on the second measurement value that relates to an average molecular weight of the raw fuel gas.

With this, the characteristic value indicating the quantitative mixture state of the hydrogen gas in the raw fuel gas can be determined on the basis of the second measurement value that relates to the average molecular weight of the raw fuel gas.

In the hydrogen generation device according to the present disclosure, the measuring instrument may determine the characteristic value based on the second measurement value that relates to thermal conductivity of the raw fuel gas.

With this, the characteristic value indicating the quantitative mixture state of the hydrogen gas in the raw fuel gas can be determined on the basis of the second measurement value that relates to the thermal conductivity of the raw fuel gas.

The hydrogen generation device according to the present disclosure may include a first flowmeter and a second flowmeter, each of which measures the flow rate of the raw fuel gas, and measurement sensitivity to hydrogen gas of the second flowmeter may be different from measurement sensitivity to hydrogen gas of the first flowmeter. In addition, the measuring instrument may determine the characteristic value based on a difference between a first flow rate measured by the first flowmeter and a second flow rate measured by the second flowmeter.

With this, the characteristic value indicating the quantitative mixture state of the hydrogen gas in the raw fuel gas can be determined on the basis of the flow rates measured by the first flowmeter and the second flowmeter which are different from each other in measurement sensitivity to hydrogen gas.

The hydrogen generation device according to the present disclosure may further include a water supplier that supplies water to the reformer, and the controller may control the water supplier based on the first measurement value and the characteristic value to cause a molar ratio of the water to be supplied to the reformer to a carbon atom contained in the raw fuel gas to be supplied to the reformer to be within a predetermined range.

With this, on the basis of the first measurement value and the characteristic value indicating the quantitative mixture state of the hydrogen gas in the raw fuel gas, the molar ratio of the water to be supplied to the reformer to the carbon atom contained in the raw fuel gas can be adjusted to be within the predetermined range. As a result, the hydrogen-containing gas can be stably generated in the reformer.

The hydrogen generation device according to the present disclosure may further include: a combustor that burns a fuel gas with air to heat the reformer; and an air supplier that supplies combustion air to the combustor, and the controller may control the air supplier based on the first measurement value and the characteristic value to cause a ratio of a flow rate of the air to be supplied to the combustor to a flow rate of the fuel gas to be supplied to the combustor or a ratio of the flow rate of the air to be supplied to the combustor to the flow rate of the raw fuel gas to be supplied to the reformer to be within a predetermined range.

With this, on the basis of the first measurement value and the characteristic value indicating the quantitative mixture state of the hydrogen gas in the raw fuel gas, the ratio of the flow rate of the air to be supplied to the combustor to the flow rate of the fuel gas to be supplied to the combustor can be adjusted to be within the predetermined range. Alternatively, on the basis of the first measurement value and the characteristic value indicating the quantitative mixture state of the hydrogen gas in the raw fuel gas, the ratio of the flow rate of the air to be supplied to the combustor to the flow rate of the raw fuel gas to be supplied to the reformer can be adjusted to be within the predetermined range. As a result, the hydrogen-containing gas can be stably generated in the reformer.

A fuel cell system according to the present disclosure includes: the hydrogen generation device; and a fuel cell that generates electric power using the hydrogen-containing gas generated by the hydrogen generation device.

With this, the hydrogen-containing gas can be stably generated in the reformer, and the electric power can be stably generated in the fuel cell.

The fuel cell system according to the present disclosure may further include a calculator that determines target output of the fuel cell system based on the characteristic value.

With this, the target output of the fuel cell system can be determined according to the quantitative mixture state of the hydrogen gas in the raw fuel gas, and the fuel cell system can be operated according to the target output.

A method for operating a hydrogen generation device according to the present disclosure is a method for operating a hydrogen generation device that generates a hydrogen-containing gas from a raw fuel gas in a reformer and includes adjusting an operation parameter for controlling generation of the hydrogen-containing gas in the reformer according to a quantitative mixture state of the hydrogen gas in the raw fuel gas.

With this, it is possible to adjust the operation parameter for controlling generation of the hydrogen-containing gas in the reformer according to the quantitative mixture state of the hydrogen gas in the raw fuel gas. Therefore, the hydrogen-containing gas can be stably generated in the reformer.

The operating method according to the present disclosure may include: measuring a first measurement value dependent on a flow rate of the raw fuel gas supplied to the reformer; measuring a second measurement value varying depending on the quantitative mixture state of the hydrogen gas in the raw fuel gas, and determining, based on the second measurement value, a characteristic value indicating the quantitative mixture state; and adjusting, based on the first measurement value and the characteristic value, an operation parameter for controlling generation of the hydrogen-containing gas in the reformer.

With this, the operation parameter for controlling the generation of the hydrogen-containing gas in the reformer is adjusted on the basis of the first measurement value dependent on the flow rate of the raw fuel gas and the characteristic value indicating the quantitative mixture state of the hydrogen gas in the raw fuel gas. Thus, the generation of the hydrogen-containing gas in the reformer can be properly controlled according to the quantitative mixture state of the hydrogen gas in the raw fuel gas, and the hydrogen-containing gas can be stably generated in the reformer.

In the operating method according to the present disclosure, the characteristic value may be determined based on the second measurement value that relates to an average molecular weight of the raw fuel gas.

With this, the characteristic value indicating the quantitative mixture state of the hydrogen gas in the raw fuel gas can be determined on the basis of the second measurement value that relates to the average molecular weight of the raw fuel gas.

In the operating method according to the present disclosure, the characteristic value may be determined based on the second measurement value that relates to thermal conductivity of the raw fuel gas.

With this, the characteristic value indicating the quantitative mixture state of the hydrogen gas in the raw fuel gas can be determined on the basis of the second measurement value that relates to the thermal conductivity of the raw fuel gas.

In the operating method according to the present disclosure, the measuring of the second measurement value may include measuring the flow rate of the raw fuel gas using a first flowmeter and a second flowmeter. In addition, measurement sensitivity to hydrogen gas of the second flowmeter may be different from measurement sensitivity to hydrogen gas of the first flowmeter, and the characteristic value may be determined based on a difference between a first flow rate measured by the first flowmeter and a second flow rate measured by the second flowmeter.

With this, the characteristic value indicating the quantitative mixture state of the hydrogen gas in the raw fuel gas can be determined on the basis of the flow rates measured by the first flowmeter and the second flowmeter which are different from each other in measurement sensitivity to hydrogen gas.

In the operating method according to the present disclosure, a molar ratio of water to be supplied to the reformer to a carbon atom contained in the raw fuel gas to be supplied to the reformer may be adjusted based on the first measurement value and the characteristic value to be within a predetermined range.

With this, on the basis of the first measurement value and the characteristic value indicating the quantitative mixture state of the hydrogen gas in the raw fuel gas, the molar ratio of the water to be supplied to the reformer to the carbon atom contained in the raw fuel gas can be adjusted to be within the predetermined range. As a result, the hydrogen-containing gas can be stably generated in the reformer.

The operating method according to the present disclosure may further include burning a fuel gas with air in a combustor to heat the reformer, and a ratio of a flow rate of the air to be supplied to the combustor to a flow rate of the fuel gas to be supplied to the combustor or a ratio of the flow rate of the air to be supplied to the combustor to the flow rate of the raw fuel gas to be supplied to the reformer may be adjusted based on the first measurement value and the characteristic value to be within a predetermined range.

With this, on the basis of the first measurement value and the characteristic value indicating the quantitative mixture state of the hydrogen gas in the raw fuel gas, the ratio of the flow rate of the air to be supplied to the combustor to the flow rate of the fuel gas to be supplied to the combustor can be adjusted to be within the predetermined range. Alternatively, on the basis of the first measurement value and the characteristic value indicating the quantitative mixture state of the hydrogen gas in the raw fuel gas, the ratio of the flow rate of the air to be supplied to the combustor to the flow rate of the raw fuel gas to be supplied to the reformer can be adjusted to be within the predetermined range. As a result, the hydrogen-containing gas can be stably generated in the reformer.

Hereinafter, an exemplary embodiment will be described in detail with reference to the drawings. However, there are instances where overly detailed description is omitted. For example, detailed description of well-known matter, overlapping description of substantially identical elements, etc., may be omitted.

Note that the accompanying drawings and the subsequent description are provided so that a person having ordinary skill in the art may sufficiently understand the present disclosure, and are not intended to limit the scope of the subject matter recited in the claims.

Exemplary Embodiment

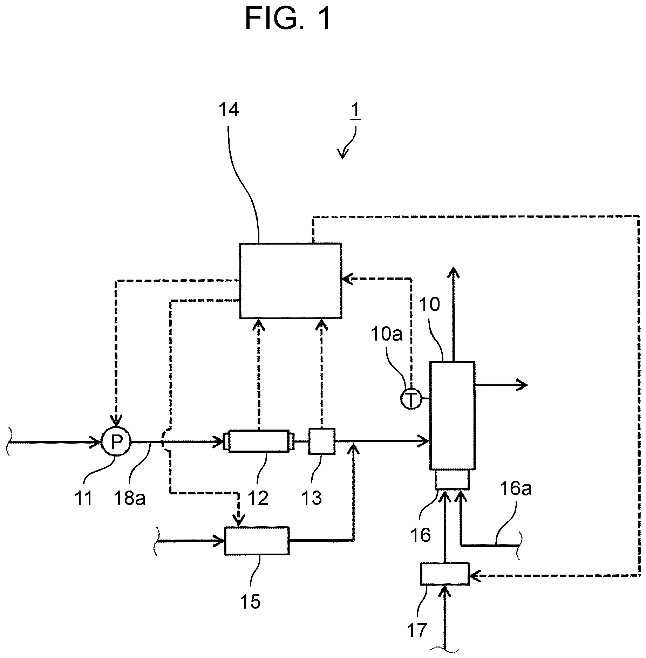

Fig. 1 is a configuration diagram illustrating hydrogen generation device 1 according to one embodiment of the present disclosure. As illustrated in Fig. 1, hydrogen generation device 1 includes reformer 10, raw fuel supplier 11, detector 12, measuring instrument 13, and controller 14.

Reformer 10 generates a hydrogen-containing gas from a raw fuel gas. Raw fuel supplier 11 supplies the raw fuel gas to reformer 10. Raw fuel supplier 11 is, for example, a pump such as a booster pump.

Detector 12 measures first measurement value M1 dependent on the flow rate of the raw fuel gas that is supplied by raw fuel supplier 11. Detector 12 is, for example, a thermal mass flowmeter.

Measuring instrument 13 measures second measurement value M2 which varies depending on the quantitative mixture state of the hydrogen gas in the raw fuel gas. Furthermore, on the basis of second measurement value M2, measuring instrument 13 determines characteristic value Vc indicating the quantitative mixture state of the hydrogen gas in the raw fuel gas.

Controller 14 adjusts operation parameter Ps on the basis of first measurement value M1 and characteristic value Vc. Operation parameter Ps is for controlling generation of the hydrogen-containing gas in reformer 10. A specific method for controlling, using operation parameter Ps, the generation of the hydrogen-containing gas in reformer 10 will be described later.

With hydrogen generation device 1, operation parameter Ps for controlling the generation of the hydrogen-containing gas in reformer 10 according to the quantitative mixture state of the hydrogen gas in the raw fuel gas is adjusted.

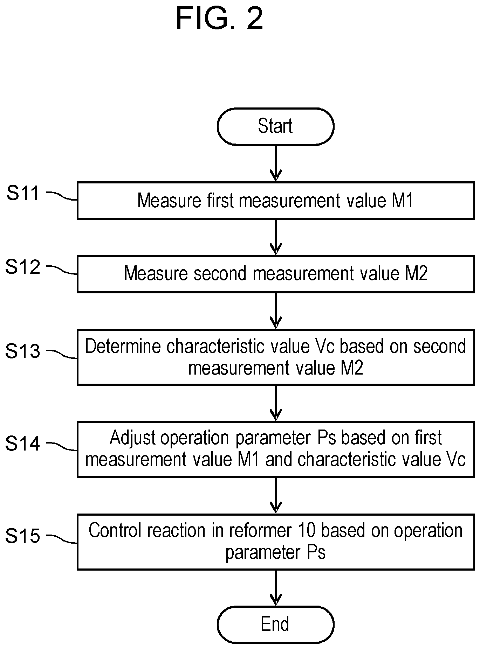

In hydrogen generation device 1, for example, when a predetermined condition is met, a series of processes illustrated in Fig. 2 is performed in order to control the generation of the hydrogen-containing gas in reformer 10.

First, in Step S11, first measurement value M1 is measured. For example, detector 12 measures first measurement value M1.

Next, in Step S12, second measurement value M2 is measured. For example, measuring instrument 13 measures second measurement value M2.

Next, in Step S13, characteristic value Vc indicating the quantitative mixture state of the hydrogen gas in the raw fuel gas is determined on the basis of second measurement value M2. For example, measuring instrument 13 determines characteristic value Vc.

Next, in Step S14, on the basis of first measurement value M1 and characteristic value Vc, operation parameter Ps for controlling the generation of the hydrogen-containing gas in reformer 10 is adjusted. For example, controller 14 adjusts operation parameter Ps on the basis of first measurement value M1 and characteristic value Vc.

Next, in Step S15, on the basis of operation parameter Ps adjusted in Step S14, reaction in reformer 10 is controlled, and a series of processes ends. The series of processes is performed regularly or irregularly during operation of hydrogen generation device 1.

Operation parameter Ps is adjusted regularly or irregularly, for example, during operation of hydrogen generation device 1. Thus, for example, even when the quantitative mixture state of the hydrogen gas in the raw fuel gas changes during operation of hydrogen generation device 1, operation parameter Ps is adjusted according to the quantitative mixture state of the hydrogen gas in the raw fuel gas.

As described above, the quantitative mixture state of the hydrogen gas in the raw fuel gas may change during operation of hydrogen generation device 1. For example, there is a possibility that the quantitative mixture state of the hydrogen gas in the raw fuel gas may become a high-level or low-level state, meaning that the quantitative mixture state of the hydrogen gas in the raw fuel gas may temporarily deviate from a standard state. In this case, operation parameter Ps is adjusted according to the high-level or low-level state. Thereafter, when the quantitative mixture state of the hydrogen gas in the raw fuel gas returns to the standard state, operation parameter Ps returns to the original value according to the standard state.

Operation parameter Ps may be adjusted, for example, before operation of hydrogen generation device 1 or during the start of hydrogen generation device 1. In this case, operation parameter Ps is adjusted according to the quantitative mixture state of the hydrogen gas in the raw fuel gas before operation of hydrogen generation device 1 or during the start of hydrogen generation device 1. Thus, hydrogen generation device 1 can be operated according to desired operation parameter Ps from the beginning of operation of hydrogen generation device 1.

In hydrogen generation device 1, adjusted operation parameter Ps may be stored. For example, upon stop of hydrogen generation device 1, operation parameter Ps used immediately before the stop of hydrogen generation device 1 is stored. The value of operation parameter Ps stored can be used, for example, at the next start of hydrogen generation device 1.

With hydrogen generation device 1, operation parameter Ps is adjusted on the basis of first measurement value M1 and characteristic value Vc. Therefore, the generation of hydrogen-containing gas in reformer 10 is properly controlled according to the quantitative mixture state of the hydrogen gas in the raw fuel gas. As a result, the hydrogen-containing gas is stably generated in reformer 10. First measurement value M1 may be the value of the flow rate of the raw fuel gas that is supplied to raw fuel supplier 11 or may be the value of a physical quantity correlated with the flow rate of the raw fuel gas. The characteristic value Vc may be a value indicating the mixing ratio of the hydrogen gas in the raw fuel gas or may be a value indicating, in a stepwise manner, the level of the quantitative mixture state of the hydrogen gas in the raw fuel gas.

When the mixing ratio of the hydrogen gas in the raw fuel gas is high, the discrepancy between first measurement value M1 and an actual value is large due to the hydrogen gas sensitivity of detector 12. In this case, the flow rate of the raw fuel gas corresponding to first measurement value M1 is lower than an actual flow rate of the raw fuel gas. Therefore, if operation parameter Ps is adjusted on the basis of first measurement value M1 only, a hydrogen-containing gas generating reaction in reformer 10 is not easily maintained in a desired state. With hydrogen generation device 1, however, operation parameter Ps is adjusted on the basis of characteristic value Vc in addition to first measurement value M1. Therefore, the hydrogen-containing gas generating reaction in reformer 10 is easily maintained in a desired state.

Note that second measurement value M2 measured by measuring instrument 13 is not limited to a specific value as long as second measurement value M2 varies depending on the quantitative mixture state of the hydrogen gas in the raw fuel gas. Measuring instrument 13 determines characteristic value Vc, for example, on the basis of second measurement value M2 that relates to an average molecular weight of the raw fuel gas. Second measurement value M2 may be a value indicating the average molecular weight of the raw fuel gas or may be the value of a physical quantity correlated with the average molecular weight of the raw fuel gas.

Second measurement value M2 that relates to the average molecular weight of the raw fuel gas may be, for example, sound speed Vs of the raw fuel gas. The relationship between sound speed Vs of the raw fuel gas and average molecular weight M of the raw fuel gas in the following expression (1) is true. In Expression (1), $\gamma$ is a heat capacity ratio (= Cp/Cv), R is a universal gas constant, T is temperature, Cp is specific heat at constant pressure, and Cv is specific heat at constant volume.

[Math. 1]

$$Vs = \sqrt{\gamma RT/M} = \sqrt{(Cp/Cv)RT/M} \qquad \text{Expression 1}$$

In addition, sound speed Vm of a mixed gas containing n components is determined according to Expression (2), for example. In this expression, Cpi is specific heat of the i-th component at constant pressure, Cvi is specific heat of the i-th component at constant volume, Xi is the molar fraction of the i-th component, and Mi is the molecular weight of the i-the component.

[Math. 2]

$$Vm = \sqrt{\{(\sum_{i=1}^{n} CpiXi)/(\sum_{i=1}^{n} CviXi)\}\{RT/\sum_{i=1}^{n} MiXi\}}$$ Expression 2

Typical examples of the raw fuel gas include a hydrocarbon gas such as a methane gas, a nitrogen gas, a carbon dioxide gas, and a hydrogen gas. The molecular weight of the hydrogen gas among these gases is significantly low compared to the molecular weight of the other gases. Therefore, variations in the mixing ratio of the hydrogen gas in the raw fuel gas have a major impact on average molecular weight M of the raw fuel gas.

For example, with reference to the representative gas composition of the raw fuel gas other than the hydrogen gas, a standard gas is prepared that does not contain a hydrogen gas, but contains gases other than the hydrogen gas at an adjusted, fixed mixing ratio. By mixing this standard gas and the hydrogen gas, two or more sample gases containing the hydrogen gas at different mixing ratios are produced. The sound speed of each of the sample gases is measured at a predetermined temperature. On the basis of this measurement result, data indicating the quantitative relationship between average molecular weight M of the raw fuel gas and sound speed Vs of the raw fuel gas at the predetermined temperature can be obtained according to Expressions (1) and (2). In addition, on the basis of the obtained data, first reference data indicating the relationship between characteristic value Vc and sound speed Vs of the raw fuel gas can be created. The value of sound speed Vs of the raw fuel gas corresponds to second measurement value M2. Measuring instrument 13 further includes storage (not illustrated in the drawings), for example, and the first reference data is stored in the storage.

Measuring instrument 13, which is disposed in supply passage 18a for the raw fuel gas, for example, measures sound speed Vs of the raw fuel gas as second measurement value M2. Furthermore, using measured second measurement value M2, measuring instrument 13 determines characteristic value Vc with reference to the first reference data. Measuring instrument 13 includes an ultrasonic gas concentration meter, for example.

Measuring instrument 13 may determine characteristic value Vc, for example, on the basis of second measurement value M2 that relates to thermal conductivity of the raw fuel gas. Second measurement value M2 may be a value indicating the thermal conductivity of the raw fuel gas or may be the value of a physical quantity correlated with the thermal conductivity of the raw fuel gas.

Note that in the case where measuring instrument 13 determines characteristic value Vc on the basis of second measurement value M2 that relates to the thermal conductivity of the raw fuel gas, measuring instrument 13 is not limited to a specific configuration as long as measuring instrument 13 can measure second measurement value M2. Measuring instrument 13 includes a heat element and a temperature sensor, for example.

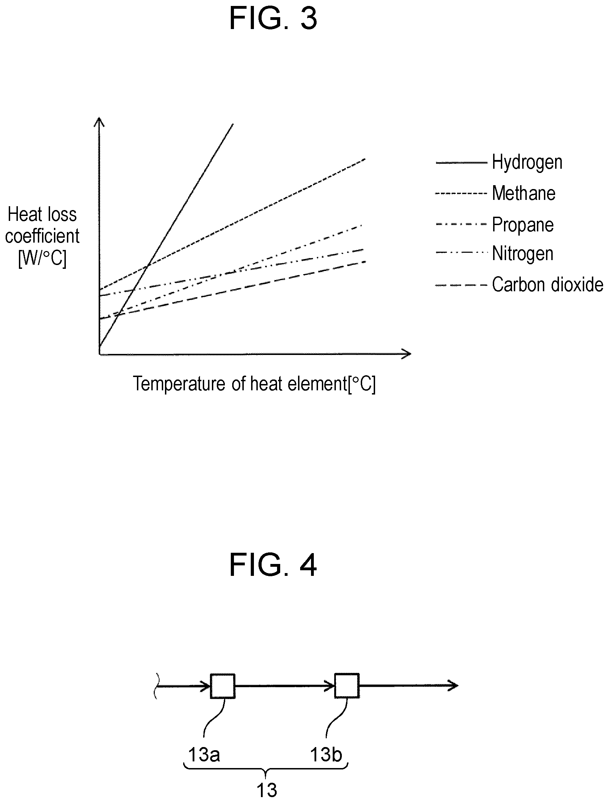

Fig. 3 indicates the relationship between the temperature of the heat element and the heat loss coefficient of each of gases such as a methane gas, a propane gas, a nitrogen gas, a carbon dioxide gas, and a hydrogen gas when the environment for the heat element is filled with the gas. As illustrated in Fig. 3, the rate of change between the heat loss coefficient of the hydrogen gas and the temperature of the heat element is significantly greater than the rate of change between the heat loss coefficient of other gases and the temperature of the heat element. Therefore, variations in the mixing ratio of the hydrogen gas in the raw fuel gas have a major impact on the rate of change between the heat loss coefficient of the raw fuel gas and the temperature of the heat element.

For example, with reference to the representative gas composition of the raw fuel gas other than the hydrogen gas, a standard gas is prepared that does not contain a hydrogen gas, but contains gases other than the hydrogen gas at an adjusted, fixed mixing ratio. By mixing this standard gas and the hydrogen gas, two or more sample gases containing the hydrogen gas at different mixing ratios are produced. The environment for the heat element is filled with each of the sample gases, the heat element is heated at two different temperatures, the temperature of the sample gas is measured, and the rate of change between the heat loss coefficient of the sample gas and the heat element is determined on the basis of the measurement results. Thus, it is possible to create second reference data indicating the relationship between characteristic value Vc and rate of change Rh between the heat loss coefficient of the raw fuel gas and the temperature of the heat element of measuring instrument 13. Note that rate of change Rh is a physical quantity correlated with the thermal conductivity of the raw fuel gas, and the value of rate of change Rh corresponds to second measurement value M2. Measuring instrument 13 further includes storage (not illustrated in the drawings), for example, and the second reference data is stored in the storage.

Measuring instrument 13, which is disposed in supply passage 18a for the raw fuel gas, for example, includes a heat element and a temperature sensor. In the state where the environment for the heat element is filled with the raw fuel gas, measuring instrument 13 causes the heat element to be heated at a predetermined temperature and measures the temperature of the raw fuel gas using the temperature sensor. On the basis of the measurement results, rate of change Rh is measured as second measurement value M2. Furthermore, using measured second measurement value M2, measuring instrument 13 determines characteristic value Vc with reference to the second reference data.

As illustrated in Fig. 4, measuring instrument 13 may include first flowmeter 13a and second flowmeter 13b, each of which measures the flow rate of the raw fuel gas, for example. Measurement sensitivity to hydrogen gas of second flowmeter 13b may be different from measurement sensitivity to hydrogen gas of first flowmeter 13a. Measuring instrument 13 determines characteristic value Vc on the basis of the difference between first flow rate Ff measured by first flowmeter 13a and second flow rate Fs measured by second flowmeter 13b, $\Delta F = |Fs - Ff|$. In this case, difference $\Delta F$ corresponds to second measurement value M2.

Measurement sensitivity to hydrogen gas of second flowmeter 13b may be different from measurement sensitivity to hydrogen gas of first flowmeter 13a. Therefore, for example, when the mixing ratio of the hydrogen gas in the raw fuel gas is high, difference $\Delta F$ is likely to be large.

For example, with reference to the representative gas composition of the raw fuel gas other than the hydrogen gas, a standard gas is prepared that does not contain a hydrogen gas, but contains gases other than the hydrogen gas at an adjusted, fixed mixing ratio. By mixing this standard gas and the hydrogen gas, two or more sample gases containing the hydrogen gas at different mixing ratios are produced. In the state where the flow rate of each of the sample gases is maintained at a predetermined flow rate, first flowmeter 13a and second flowmeter 13b measure the flow rate of the sample gas, and difference $\Delta F$ between first flow rate Ef and second flow rate Fs is obtained. Thus, third reference data indicating the relationship between difference $\Delta F$ and characteristic value Vc can be created. Measuring instrument 13 further includes storage (not illustrated in the drawings), for example, and the third reference data is stored in the storage.

Measuring instrument 13 is disposed, for example, in supply passage 18a for the raw fuel gas. Measuring instrument 13 detects, as second measurement value M2, difference $\Delta F$ between first flow rate Ff of the raw fuel gas measured by first flowmeter 13a and second flow rate Fs of the raw fuel gas measured by second flowmeter 13b. Furthermore, using measured second measurement value M2, measuring instrument 13 determines characteristic value Vc with reference to the third reference data.

Note that first flowmeter 13a and second flowmeter 13b are not limited to specific flowmeters as long as measurement sensitivity to hydrogen gas of second flowmeter 13b is different from measurement sensitivity to hydrogen gas of first flowmeter 13a. Each of first flowmeter 13a and second flowmeter 13b may be, for example, a thermal mass flowmeter. Detector 12 may be a flowmeter separate from first flowmeter 13a and second flowmeter 13b, and one of first flowmeter 13a and second flowmeter 13b may also serve as detector 12.

As illustrated in Fig. 1, hydrogen generation device 1 includes temperature sensor 10a, for example. Temperature sensor 10a measures the internal temperature of reformer 10. Controller 14 is connected to temperature sensor 10a so as to be able to obtain information indicating the result of the detection by temperature sensor 10a.

Note that the process in Step S14 is not limited to a specific process as long as operation parameter Ps can be adjusted on the basis of first measurement value M1 and characteristic value Vc. Hydrogen generation device 1 further includes storage (not illustrated in the drawings), for example, and a first table and a second table are stored in the storage, for example. As shown in Table 1, the first table is data indicating the relationship between first measurement value M1 and operation parameter Ps. As shown in Table 2, the second table is data indicating the relationship between first measurement value M1, characteristic value Vc, and a modified value of operation parameter Ps.

In Step S14, controller 14 obtains first measurement value M1 and characteristic value Vc from detector 12 and measuring instrument 13, respectively. Subsequently, controller 14 reads the first table and the second table from the storage, refers to these tables, and determines operation parameter Ps corresponding to first measurement value M1 and characteristic value Vc.

Table 1

| First Measurement Value M1 | Operation Parameter Ps | | | |
|---|---|---|---|---|
| | Amount of Water Supplied to Reformer | Amount of Fuel Gas Supplied to Combustor | Amount of Raw Fuel Gas Supplied to Re ormer | Amount of Air Supplied to Combustor |
| m1 | s1 | f1 | r1 | a1 |
| m2 | s2 | f2 | r2 | a2 |
| m3 | s3 | f3 | r3 | a3 |
| ... | ... | ... | ... | ... |

Table 2

| First Measurement Value M1 | Characteristic Value Vc | Modified Value of Operation Parameter Ps | | | |
|---|---|---|---|---|---|
| | | Amount of Water Supplied to Reformer | Amount of Fuel Gas Supplied to Combustor | Amount of Raw Fuel Gas Supplied to Reformer | Amount of Air Supplied to Combustor |
| m1 | v1 | s11 | f11 | r11 | a11 |
| | v2 | s12 | f12 | r12 | a12 |
| | v3 | s13 | f13 | r13 | a13 |
| | ... | ... | ... | ... | ... |
| m2 | v1 | s21 | f21 | r21 | a21 |
| | v2 | s22 | f22 | r22 | a22 |
| | v3 | s23 | f23 | r23 | a23 |
| | ... | ... | ... | ... | ... |
| ... | ... | ... | ... | ... | ... |

Note that operation parameter Ps is not limited to a specific parameter as long as operation parameter Ps is for controlling the generation of the hydrogen-containing gas in reformer 10. As illustrated in Fig. 1, hydrogen generation device 1 further includes water supplier 15. Water supplier 15 supplies water to reformer 10. In reformer 10, for example, the following reactions of steam reforming and hydrogen generation occur. A catalyst for accelerating the following reactions is contained in reformer 10. Water supplier 15 is a pump, for example.

$$CnHm + nH2O \rightarrow nCO + (m/2+n)H2$$

$$nCO + nH2O \rightarrow nCO2 + nH2$$

For example, in Step S14, on the basis of first measurement value M1 and characteristic value Vc, molar ratio S/C of water to be supplied to reformer 10 to carbon atoms contained in the raw fuel gas to be supplied to reformer 10 is adjusted to be within a predetermined range. For example, controller 14 adjusts this molar ratio S/C. Molar ratio S/C is adjusted so as to exceed 2.5, for example. Thus, carbon deposition on the catalyst is minimized, allowing increased durability of hydrogen generation device 1.

Controller 14 controls water supplier 15 so that molar ratio S/C falls within the predetermined range, for example. Controller 14 may control raw fuel supplier 11 so that molar ratio S/C falls within the predetermined range. Controller 14 transmits a predetermined control signal to raw fuel supplier 11 or water supplier 15 and adjusts molar ratio S/C to be within the predetermined range.

As illustrated in Fig. 1, hydrogen generation device 1 further includes combustor 16 and air supplier 17, for example. Combustor 16 burns a fuel gas with air to heat reformer 10. Air supplier 17 supplies combustion air to combustor 16.

For example, in Step S14, on the basis of first measurement value M1 and characteristic value Vc, ratio Rfa of the flow rate of air to be supplied to combustor 16 to the flow rate of the fuel gas to be supplied to combustor 16 may be adjusted to be within a predetermined range. In this case, for example, controller 14 adjusts ratio Rfa. Ratio Rfa is adjusted to anywhere between 1.3 and 2.0, for example. Thus, carbon monoxide generation in the combustor is minimized, enabling stable operation of hydrogen generation device 1.

Note that in Step S14, on the basis of first measurement value M1 and characteristic value Vc, ratio Rra of the flow rate of the air to be supplied to combustor 16 to the flow rate of the raw fuel gas to be supplied to reformer 10 may be adjusted to be within a predetermined range. In this case, for example, controller 14 adjusts ratio Rra. Accordingly, air can be supplied to combustor 16 at a desired flow rate according to the quantitative mixture state of the hydrogen gas in the raw fuel gas. Thus, the above-described reactions are properly controlled in reformer 10. Controller 14 controls air supplier 17 so that ratio Rfa or ratio Rra falls within a predetermined rage, for example.

Air supplier 17 is a fan or a blower, for example. In addition, fuel gas passage 16a is connected to combustor 16. The fuel gas is supplied to combustor 16 through fuel gas passage 16a. Note that the fuel gas is not limited to a specific gas. The fuel gas may contain the raw fuel gas, may contain the hydrogen-containing gas generated in reformer 10, or may contain other flammable gases.

For example, in Step S14, controller 14 transmits a predetermined control signal to air supplier 17 and adjusts ratio Rfa or ratio Rra to be within a predetermined range. Note that the state of fuel gas combustion in combustor 16 may be monitored by a flame detector such as a flame rod.

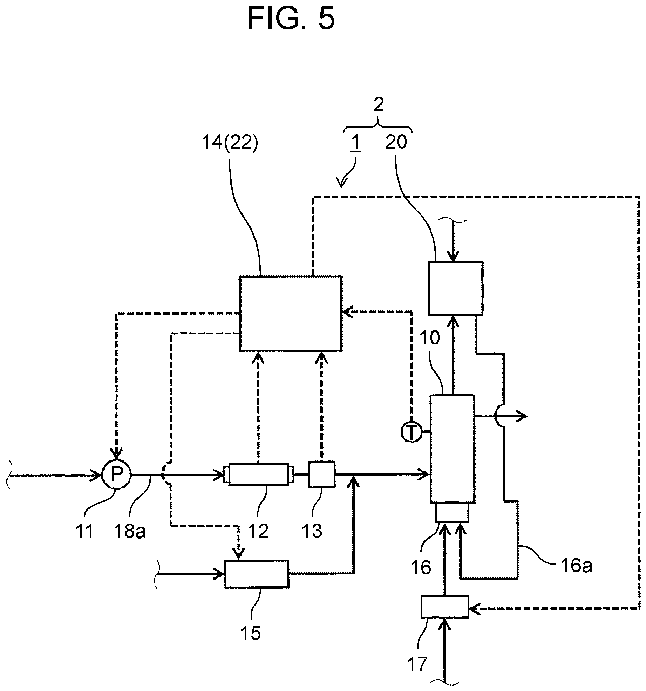

As illustrated in Fig. 5, fuel cell system 2 can be provided using hydrogen generation device 1. Fuel cell system 2 includes hydrogen generation device 1 and fuel cell 20. Fuel cell 20 generates electric power using the hydrogen-containing gas generated by hydrogen generation device 1. Note that fuel cell 20 may be a polymer electrolyte fuel cell (PEFC) or may be a solid oxide fuel cell (SOFC).

The hydrogen-containing gas is supplied to the anode of fuel cell 20, and an oxidant gas such as air is supplied to the cathode of fuel cell 20. Thus, in fuel cell 20, the reaction between the hydrogen-containing gas and the oxidant gas generates electric power. This reaction, that is, the electric power generation, is accompanied by heat generation. In fuel cell system 2, the generated heat is used, for example, to generate hot water. For example, in fuel cell system 2, the heat generated in fuel cell 20 is recovered using cooling water. An anode off-gas which is an exhaust gas from the anode of fuel cell 20 may contain a hydrocarbon gas and a hydrogen gas. In fuel cell system 2, the anode off-gas discharged from fuel cell 20 is supplied to combustor 16 as a fuel gas, for example.

As illustrated in Fig. 5, fuel cell system 2 further includes calculator 22. Calculator 22 determines target output Pt of fuel cell system 2 on the basis of characteristic value Vc. For example, when characteristic value Vc indicates that the level of the quantitative mixture state of the hydrogen gas in the raw fuel gas is relatively high, relatively low target output Pt is determined. This is because, when the mixing ratio of the hydrogen gas in the raw fuel gas is high, the amount of the hydrogen gas generated by the reaction in reformer 10 from the raw fuel gas at a constant flow rate is relatively small.

As illustrated in Fig. 5, controller 14 of hydrogen generation device 1 may also serve as calculator 22, for example. For example, a program for determining target output Pt of fuel cell system 2 based on characteristic value Vc may be executed in controller 14. Hardware for calculator 22 may be configured separately from hardware for controller 14.

One example of the adjustment of operation parameter Ps will be described. Table 3 shows an example of operation conditions for fuel cell system 2 where the adjustment of operation parameter Ps based on first measurement value M1 and characteristic value Vc is not made while gas A and gas B are used as the raw fuel gases. In Table 3, NLM stands for normal liter per minute. Gas A is a 100% methane gas. Gas B is a mixed gas containing 80% of the methane gas and 20% of the hydrogen gas on a volumetric basis.

As shown in Table 3, when gas A is used as the raw fuel gas, the temperature of reformer 10 and combustion air ratio λ are maintained at target values, meaning that fuel cell system 2 operates under desired conditions. In contrast, when gas B is used as the raw fuel gas, an actual flow rate is higher than the flow rate recognized by the flowmeter; however, in the fuel cell system, control is performed on the basis of the flow rate recognized by the flowmeter. Therefore, ratio λ of a target air amount which is a target value of an actual amount of air to be supplied to combustor 16 to a required air amount which is a required amount of air for complete combustion of the raw fuel gas in combustor 16 is low in actuality. Due to the flow rate of the raw fuel gas being high and ratio λ being low in actuality, the temperature of reformer 10 is higher than a target temperature.

In order to avoid such a situation, in fuel cell system 2, in actuality, for example, ratio Rfa or ratio Rra is adjusted to be within the predetermined range through the adjustment of operation parameter Ps based on first measurement value M1 and characteristic value Vc. For example, when gas B is used as the raw fuel gas, operation parameter Ps is adjusted so that the flow rate of air to be supplied to combustor 16 is higher than the target air amount shown in Table 3.

In the example shown in Table 3, when gas B is used, the actual flow rate is higher than the flow rate recognized by the flowmeter. Therefore, molar ratio S/C is lower than the predetermined range, leading to the possibility of carbon deposition on the catalyst. In order to avoid such a situation, in fuel cell system 2, in actuality, for example, molar ratio S/C is adjusted to be within the predetermined range through the adjustment of operation parameter Ps based on first measurement value M1 and characteristic value Vc.

For example, when gas B is used as the raw fuel gas, operation parameter Ps is adjusted so that the amount of water to be supplied to reformer 10 is greater than the value shown in Table 3. For example, water supplier 15 is controlled so that molar ratio S/C exceeds 2.5, and thus carbon deposition on the catalyst is minimized. As a result, it is possible to increase the durability of hydrogen generation device 1.

In the example shown in Table 3, when gas B is used, both combustion air ratio λ and molar ratio S/C deviate from the target values. However, it is also expected that only one of combustion air ratio λ and molar ratio S/C will deviate from the target value. Even in such a case, by adjusting operation parameter Ps so that the actual value expected to deviate from the target value falls within the target value, it is possible to properly control the generation of the hydrogen-containing gas in reformer 10.

Operation parameter Ps is adjusted regularly or irregularly, for example, during operation of fuel cell system 2. Thus, for example, even when the quantitative mixture state of the hydrogen gas in the raw fuel gas changes over time during operation of fuel cell system 2, operation parameter Ps is adjusted according to the quantitative mixture state of the hydrogen gas in the raw fuel gas.

Note that operation parameter Ps may be adjusted, for example, before operation of fuel cell system 2 or during the start of fuel cell system 2. In this case, the adjustment of operation parameter Ps depending on the quantitative mixture state of the hydrogen gas in the raw fuel gas is made before operation of fuel cell system 2 or during the start of fuel cell system 2. Therefore, fuel cell system 2 can operate according to desired operation parameter Ps from the beginning of operation of fuel cell system 2.

In fuel cell system 2, adjusted operation parameter Ps may be stored. For example, upon stop of hydrogen generation device 1, operation parameter Ps used immediately before the stop of hydrogen generation device 1 is stored. The value of operation parameter Ps stored can be used, for example, at the next start of fuel cell system 2.

Table 3

| Raw Fuel Gas | | Gas A | | Gas B | | Target Value |
|---|---|---|---|---|---|---|
| Composition of Raw Fuel Gas | | Methane Gas: 100% | | Methane Gas: 80% Hydrogen Gas: 20% | | |
| Value Type | | Measurement value | Actual value | Measurement value | Actual value | |
| Flow Rate of Raw Fuel Gas | NLM | 3.0 | 3.0 | 2.9 | 4.5 | |
| Amount of Water Supplied to Re ormer | $cm^3/min$ | 7.3 | | 7.0 | | |
| Amount of Air Supplied to Combustor | NLM | 16 | | 11 | | |
| Temperature of Reformer | °C | 600 | | 650 | | 600 |
| λ | | 1.6 | 1.6 | 1.6 | 1.1 | 1.3 -2.0 |
| S/C | | 2.8 | 2.8 | 2.8 | 2.3 | > 2.5 |

REFERENCE MARKS IN THE DRAWINGS

| | |
|---|---|
| 1 | hydrogen generation device |
| 2 | fuel cell system |
| 10 | reformer |
| 11 | raw fuel supplier |
| 12 | detector |
| 13 | measuring instrument |
| 13a | first flowmeter |
| 13b | second flowmeter |
| 14 | controller |
| 15 | water supplier |
| 16 | combustor |
| 16a | fuel gas passage |
| 17 | air supplier |
| 18a | supply passage |
| 20 | fuel cell |
| 22 | calculator |
| M1 | first measurement value |
| M2 | second measurement value |
| Ps | operation parameter |
| Vc | characteristic value |

**Claims**

1. A hydrogen generation device comprising:

   a reformer that generates a hydrogen-containing gas from a raw fuel gas;
   a raw fuel supplier that supplies the raw fuel gas to the reformer;
   a detector that measures a first measurement value dependent on a flow rate of the raw fuel gas supplied by the raw fuel supplier;
   a measuring instrument that measures a second measurement value varying depending on a quantitative mixture state of a hydrogen gas in the raw fuel gas, and determines, based on the second measurement value, a characteristic value indicating the quantitative mixture state; and
   a controller that adjusts, based on the first measurement value and the characteristic value, an operation parameter for controlling generation of the hydrogen-containing gas in the reformer.

2. The hydrogen generation device according to claim 1, wherein
   the measuring instrument determines the characteristic value based on the second measurement value that relates to an average molecular weight of the raw fuel gas.

3. The hydrogen generation device according to claim 1, wherein
   the measuring instrument determines the characteristic value based on the second measurement value that relates to thermal conductivity of the raw fuel gas.

4. The hydrogen generation device according to claim 1, wherein

   the measuring instrument includes a first flowmeter and a second flowmeter, each of which measures the flow rate of the raw fuel gas,
   measurement sensitivity to hydrogen gas of the second flowmeter may be different from measurement sensitivity to hydrogen gas of the first flowmeter, and
   the measuring instrument determines the characteristic value based on a difference between a first flow rate measured by the first flowmeter and a second flow rate measured by the second flowmeter.

5. The hydrogen generation device according to any one of claims 1 to 4, further comprising:

   a water supplier that supplies water to the reformer, wherein
   the controller controls the water supplier based on the first measurement value and the characteristic value to cause a molar ratio of the water to be supplied to the reformer to a carbon atom contained in the raw fuel gas to be supplied to the reformer to be within a predetermined range.

6. The hydrogen generation device according to any one of claims 1 to 5, further comprising:

   a combustor that burns a fuel gas with air to heat the reformer; and
   an air supplier that supplies combustion air to the combustor, wherein
   the controller controls the air supplier based on the first measurement value and the characteristic value to cause a ratio of a flow rate of the air to be supplied to the combustor to a flow rate of the fuel gas to be supplied to the combustor or a ratio of the flow rate of the air to be supplied to the combustor to the flow rate of the raw fuel gas to be supplied to the reformer to be within a predetermined range.

7. A fuel cell system comprising:

   the hydrogen generation device according to any one of claims 1 to 6; and
   a fuel cell that generates electric power using the hydrogen-containing gas generated by the hydrogen generation device.

8. The fuel cell system according to claim 7, further comprising:
   a calculator that determines target output of the fuel cell system based on the characteristic value.

9. A method for operating a hydrogen generation device that generates a hydrogen-containing gas from a raw fuel gas in a reformer, the method comprising:

adjusting an operation parameter for controlling generation of the hydrogen-containing gas in the reformer according to a quantitative mixture state of a hydrogen gas in the raw fuel gas.

10. The method according to claim 9, comprising:

measuring a first measurement value dependent on a flow rate of the raw fuel gas supplied to the reformer;
measuring a second measurement value varying depending on the quantitative mixture state of the hydrogen gas in the raw fuel gas, and determining, based on the second measurement value, a characteristic value indicating the quantitative mixture state; and
adjusting, based on the first measurement value and the characteristic value, an operation parameter for controlling generation of the hydrogen-containing gas in the reformer.

11. The method according to claim 10, wherein
the characteristic value is determined based on the second measurement value that relates to an average molecular weight of the raw fuel gas.

12. The method according to claim 10, wherein
the characteristic value is determined based on the second measurement value that relates to thermal conductivity of the raw fuel gas.

13. The method according to claim 10, wherein

the measuring of the second measurement value includes measuring the flow rate of the raw fuel gas using a first flowmeter and a second flowmeter,
measurement sensitivity to hydrogen gas of the second flowmeter is different from measurement sensitivity to hydrogen gas of the first flowmeter, and
the characteristic value is determined based on a difference between a first flow rate measured by the first flowmeter and a second flow rate measured by the second flowmeter.

14. The method according to any one of claims 10 to 13, wherein
a molar ratio of water to be supplied to the reformer to a carbon atom contained in the raw fuel gas to be supplied to the reformer is adjusted based on the first measurement value and the characteristic value to be within a predetermined range.

15. The method according to any one of claims 10 to 14, further comprising:

burning a fuel gas with air in a combustor to heat the reformer, wherein
a ratio of a flow rate of the air to be supplied to the combustor to a flow rate of the fuel gas to be supplied to the combustor or a ratio of the flow rate of the air to be supplied to the combustor to the flow rate of the raw fuel gas to be supplied to the reformer is adjusted based on the first measurement value and the characteristic value to be within a predetermined range.

# FIG. 1

# FIG. 2

Start

S11 — Measure first measurement value M1

S12 — Measure second measurement value M2

S13 — Determine characteristic value Vc based on second measurement value M2

S14 — Adjust operation parameter Ps based on first measurement value M1 and characteristic value Vc

S15 — Control reaction in reformer 10 based on operation parameter Ps

End

# FIG. 3

Heat loss
coefficient
[W/°C]

Temperature of heat element[°C]

——— Hydrogen
- - - - - - Methane
- · - · · - Propane
— · · — · Nitrogen
— — — Carbon dioxide

# FIG. 4

13a          13b

13

# FIG. 5

## INTERNATIONAL SEARCH REPORT

| | International application No. |
|---|---|
| | PCT/JP2020/040604 |

**A. CLASSIFICATION OF SUBJECT MATTER**
C01B 3/38(2006.01)i; H01M 8/00(2016.01)i; H01M 8/0438(2016.01)i; H01M 8/04537(2016.01)i; H01M 8/04746(2016.01)i; H01M 8/0606(2016.01)i; H01M 8/10(2016.01)i; H01M 8/12(2016.01)i
FI: C01B3/38; H01M8/00 Z; H01M8/0438; H01M8/04537; H01M8/04746; H01M8/0606; H01M8/10 101; H01M8/12 101

According to International Patent Classification (IPC) or to both national classification and IPC

**B. FIELDS SEARCHED**

Minimum documentation searched (classification system followed by classification symbols)
C01B3/38; H01M8/00; H01M8/0438; H01M8/04537; H01M8/04746; H01M8/0606; H01M8/10; H01M8/12

Documentation searched other than minimum documentation to the extent that such documents are included in the fields searched
| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 59-92901 A (TOYO ENGINEERING CORPORATION) 29 | 1-5, 7, 9-14 |
| A | May 1984 (1984-05-29) claims, page 2, upper right column, line 4 to page 8, lower right column, line 2 from the bottom, examples, drawings | 6, 8, 15 |
| A | WO 2013/132847 A1 (PANASONIC CORP.) 12 September 2013 (2013-09-12) entire text | 1-15 |
| A | JP 2004-059337 A (TOKYO GAS CO., LTD.) 26 February 2004 (2004-02-26) entire text | 1-15 |

☐ Further documents are listed in the continuation of Box C.    ☒ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 23 December 2020 (23.12.2020) | 12 January 2021 (12.01.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

| International application No. |
| --- |
| PCT/JP2020/040604 |

| Patent Documents referred in the Report | Publication Date | Patent Family | Publication Date |
| --- | --- | --- | --- |
| JP 59-92901 A | 29 May 1984 | (Family: none) | |
| WO 2013/132847 A1 | 12 Sep. 2013 | EP 2824067 A1 Entire text | |
| JP 2004-059337 A | 26 Feb. 2004 | (Family: none) | |

Form PCT/ISA/210 (patent family annex) (January 2015)

**EP 4 067 299 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004059354 A